Europäisches Patentamt

European Patent Office

Office européen des brevets

(19)

(11) Numéro de publication: **0 177 595**
**B1**

(12)    # FASCICULE DE BREVET EUROPEEN

(45) Date de publication du fascicule du brevet: **14.11.90**     (51) Int. Cl.⁵: **H 02 M 3/335**

(21) Numéro de dépôt: **85902050.5**

(22) Date de dépôt: **17.04.85**

(86) Numéro de dépôt international:
**PCT/FR85/00089**

(87) Numéro de publication internationale:
**WO 85/04992 07.11.85 Gazette 85/24**

(54) ALIMENTATION POUR PANNEAU DE VISUALISATION A PLASMA.

| | |
|---|---|
| (30) Priorité: **20.04.84 FR 8406276** | (73) Titulaire: **MARTCHEV, Stephane**<br>**133, rue Saint Dominique**<br>**F-75007 Paris (FR)** |
| (43) Date de publication de la demande:<br>**16.04.86 Bulletin 86/16** | (72) Inventeur: **MARTCHEV, Stephane**<br>**133, rue Saint Dominique**<br>**F-75007 Paris (FR)** |
| (45) Mention de la délivrance du brevet:<br>**14.11.90 Bulletin 90/46** | |
| (84) Etats contractants désignés:<br>**AT BE CH DE FR GB IT LI LU NL SE** | (56) Documents cités:<br>Valvo,Technische Informationen für die<br>Industrie,No.770415,April 1977,Hamburg (DE)<br>"Steur- und Regelschaltung TDA 1060 für<br>Schaltnetzteile",see figures 12,18;page<br>7,paragraph 2.6.2.;"Fernsteuerung;pages |
| (56) Documents cités:<br>**US-A-4 209 826** | 10,11;paragraph 3 "Schaltungsbeispiele<br>Electrical Design News,volume<br>27,No.22,November 1982,Boston,Mass.(US)<br>R.Burani et al. 1 "Isolation Transformer<br>improves MOSFET driver",see figure 2<br>SID 78 Digest:SID International Symposium<br>Digest of Technical Papers 1978,Los Angeles<br>(US) L.Turner:"Implementation of an advanced<br>plasma display terminal",pages 48,49<br>Review of Scientific Instruments,volume<br>51,No.6,June 1980,B.A.Hoegger et al.:"Double<br>Probe circuit used in a pulse plasma<br>diagnostics",pages 735-737,see figures 1,3 |

EP 0 177 595 B1

**Description**

La présente invention est basée sur l'utilisation de circuits spécialisés pour la réalisation d'alimentation de puissance à découpage. L'arrangement des différents circuits et le choix de la fréquence de découpage tels qu'ils ont été appliqués sur le prototype décrit ci-après, permettent de présenter une alimentation de puissance parfaitement adaptée au fonctionnement des panneaux de visualisation graphique et alphanumérique à plasma et de leurs périphériques de commande et de gestion. Le document "S.I.D.: Symposium Digest of technical papers (1978)" décrit une alimentation et une commande pour ecraus plasma selon l'Art anterieur. Les caractéristiques de la revendication 1 décrivent l'invention.

1. Caractéristiques.
   Tension D'entree:
      Réseau 220V±10% 50 Hz
   Tensions de Sortie:
      +5 V 20A pour l'alimentation des circuits intégrés TTL de gestion des informations de l'écran plasma.
      +12V 2A et −12V 1,5A pour les circuits d'interface de l'écran plasma. Sources Haute Tension positive et négative pour alimenter les cellules du plasma.

Ces tensions sont comprises entre 80V et 100V suivant les caractéristiques de l'écran plasma. Des résistances de valeur appropriées aux caractéristiques propres à l'écran plasma, permettent de programmer ces tensions depuis l'écran.
   Disposition particulière:
   Pour un fonctionnement correct de l'écran plasma, les hautes tensions doivent être apliquées seulement après les basses tensions 5V et +12V. De même, à l'arrêt, les hautes tensions doivent être coupées avant la disparition des basses tensions.

Un circuit de détection du niveau de la tension secteur est donc prévu pour prévenir des baisses de tension ou des coupures.

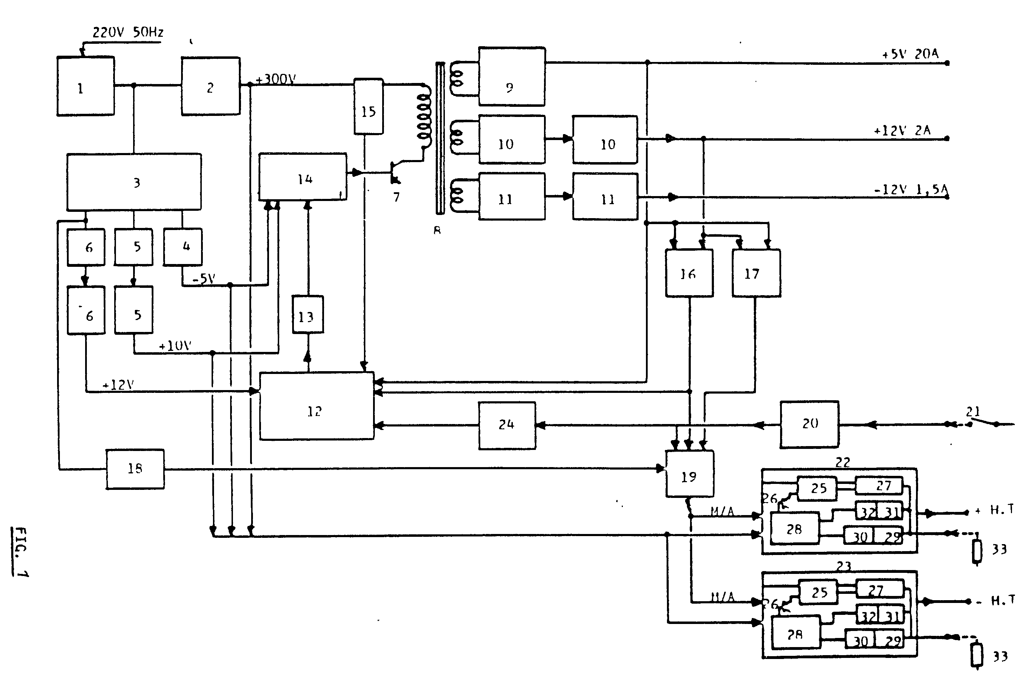

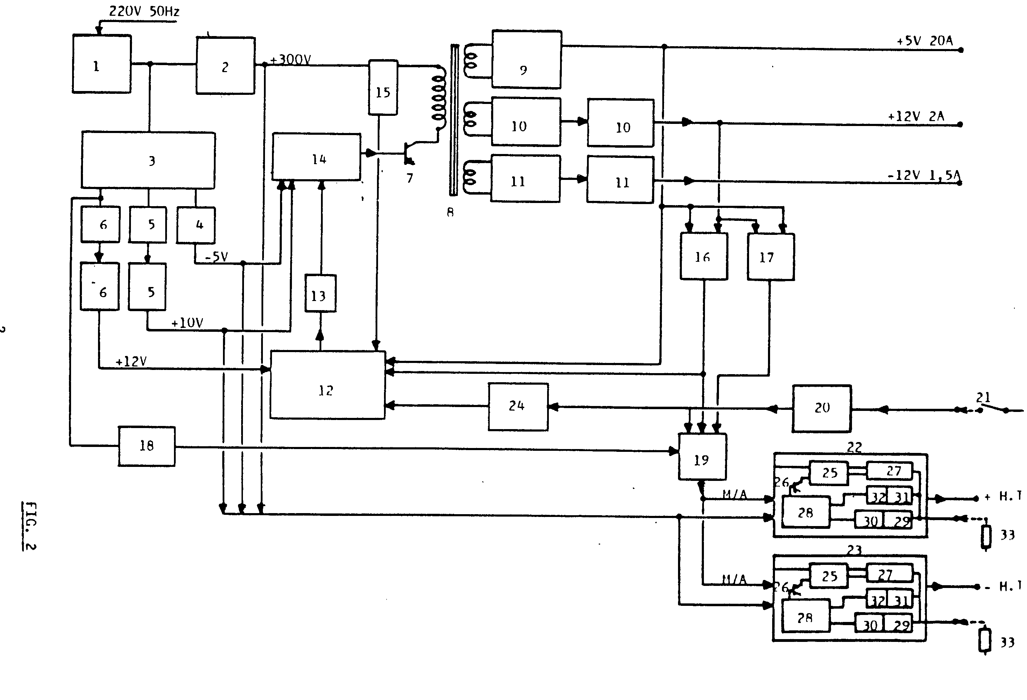

2. Principe de fonctionnement des basses tensions. (Planche 2/3) Fig. 2
Généralités

Les différentes tensions sont générées par des systèmes de convertisseurs fonctionnant directement à partir de la tension du secteur redressé et filtré. En utilisant une fréquence de fonctionnement ultrasonore de 20 KHz, il est possible de réduire les dimensions des transformateurs et d'éviter le risque de perturbations par bruits acoustiques.

La régulation est obtenue par variation du facteur de forme des impulsions issues des convertisseurs. Ce principe de fonctionnement procure une amélioration très importante du rendement de l'alimentation, contrairement aux régulateurs série généralement utilisés. Cela entraîne une diminution des dimensions de l'alimentation, notamment par diminution des dimensions des éléments thermiques et des transformateurs.

2.1. Circuit d'Entrée Secteur

Le secteur 220V est appliqué à l'alimentation, après un interrupteur agissant sur chaque pole et les fusibles de protection.

Un filtre (1) placé en amont évite d'injecter dans le réseau, des parasites en provenance des circuits de commutation rapide des convertisseurs. Le secteur est ensuite appliqué à un redresseur en pont (2) et une capacité de filtrage, pour obtenir une tension continue d'environ 300V. Le secteur alimente également le primaire du transformateur annexe (3). Ce transformateur fournit à ses secondaires, les tensions nécessaires pour obtenir, après redressement et filtrage, les tensions suivantes: −5V filtré (4), +10V régulé (5), +12V régulé (6). Ces tensions à faible débit permettent le fonctionnement des circuits intégrés commandant les convertisseurs, ainsi que l'alimentation des circuits annexes.

2.2. Convertisseur principal

Le convertisseur principal fournit les basses tensions 5V 20A et + et −12V.

Ce convertisseur à un transistor de puissance haute tension (7) est du type "Forward". Dans ce type de convertisseur, la tension de 300V filtrée, est appliquée au primaire d'un transformateur à noyau de ferrite (8). Le transistor de puissance commute cette tension à une fréquence de 20 KHz. Le temps de conduction détermine le facteur de forme de la tension rectangulaire ainsi générée au primaire du transformateur. La variation de ce facteur de forme permet d'obtenir une variation de l'énergie aux secondaires du transformateur.

Les secondaires, suivis d'un système de redressement et filtrage à self en tête, délivrent les trois tensions nécessaires au fonctionnement des circuits de gestion de l'écran plasma: 5V 20A (9), +12V (10) et −12V (11). La tension de 5V 20A est directement contrôlée en fonction des variations de secteur et de la charge. Le système de redressement mono alternance avec filtre à self en tête, donne une tension de sortie proportionnelle à la tension, mais également au rapport cyclique des impulsions. La régulation par variation du facteur de forme des impulsions, est obtenue par un circuit intégré spécialisé (12). Ce circuit comporte un oscillateur fonctionnant dans le montage à 20 KHz. La largeur des impulsions en sortie dépend de la tension d'erreur entre une tension de référence et une fraction de la tension du 5V 20A. Le contrôle de la tension de sortie est donc obtenu par modulation du rapport cyclique des impulsions, sans pertes importantes d'énergie.

Les impulsions issues du circuit (12) sont ensuite transmises par un petit transformateur (13) réalisant l'isolement galvanique avec les circuits reliés au secteur. Un circuit intégré spécialisé (14) servant d'interface, transmet les impulsions à la base du transistor de puissance (7). Ce circuit est alimenté par les tensions annexes +10V (5) et −5V (4).

Le transistor de puissance (7) fonctionnant en bloqué ou saturé, sur l'enroulement primaire du transformateur (8) fournit à celui-ci, la source de puissance à 20 KHz. Ce mode de fonctionnement permet de générer une énergie importante à 20 KHz sans pertes conséquentes. Un premier enroulement au secondaire fournit directement l'énergie au circuit de redressement filtrage du 5V 20A (9).

Une paire d'enroulements annexes, fournit les tensions nécessaires à deux régulateurs série. Ces tensions sont obtenues comme pour le circuit 5V 20A, par redressement et filtrage à self en tête. La tension ainsi appliquée aux régulateurs est déjà ainsi régulée en fonction des variations de tension du secteur. Il est possible ainsi de fournir aux régulateurs, le minimum de tension nécessaire, pour compenser les variations dûes à la charge. Cette disposition permet d'améliorer le rendement des circuits de régulation des + et −12V. Les régulateurs sont des régulateurs intégrés comportant, un circuit de limitation de courant et de protection thermique. Les sources se trouvent ainsi protégées contre les risques de court-circuit sur l'utilisation.

La protection contre les surcharges en courant sur le 5V 20A est obtenue par le contrôle du courant débité au primaire du transformateur (8) par le transistor de puissance (7). Une surcharge réduit la durée des impulsions et fait chuter les tensions redressées. Ce circuit fait appel à un transformateur de mesure de courant (15) agissant sur une entrée du circuit intégré (12). Les régulateurs de tension +12V (10) et −12V (11) possèdent leur propre protection de courant intégrée au circuit protection de surtension sur +5V et +12V. Un circuit de comparaison (16), propre à chaque tension détecte tout dépassement anormal de tension. En cas d'action d'un des deux circuits, un thyristor est amorcé, bloquant les impulsions du circuit (12) et par suite toutes les tensions de sortie.

2.3. Circuits annexes

La présence des sources basse tension est détectée par un comparateur (17) à seuil de 4,75V pour le 5V et la conduction d'une diode zener pour le +12V. La présence simultanée de ces deux tensions est nécessaire pour valider la commande des hautes tensions.

Un détecteur de seuil (18) contrôle la tension du secteur. Il délivre une information dès qu'il mesure une tension égale ou supérieure à 198V, correspondant au secteur −10%. Ce seuil correspond au niveau inférieur de la plage de fonctionnement de l'alimentation. Ce circuit permet de prévenir d'une coupure ou baisse anormale de la tension secteur, par la coupure rapide des circuits haute tension.

Le circuit (20) permet l'arrêt et la mise en fonctionnement de l'écran plasma depuis celui-ci. Cette commande est isolée du réseau. Le retard (24) entre la commande de ce circuit, sur les hautes tensions et les basses tensions permet de respecter la séquence d'arrêt des alimentations.

2.4. Circuit de commande des hautes tensions (19).

Ce circuit commande la mise en route, ou l'arrêt des sources hautes tensions. Cette commande agit par la présence simultanée:

des sources +5V (9) et +12V (10)

de la plage correcte de fonctionnement du secteur

de l'absence de fonctionnement du circuit de surtension des tensions 5V et +12V (16)

de la commande du circuit d'inhibition (20). Ce circuit n'autorise ainsi le fonctionnement des sources haute tension que lorsque toutes les conditions sont remplies. En cas de coupure du secteur, ou d'arrêt en provenance de la commande de l'écran plasma (21), les sources haute tension sont immédiatement arrêtées. Les basses tensions sont encore fournies pendant un bref instant par la réserve d'énergie des capacités de filtrage du 300V (2).

3. Sources Haute Tension (Planche 2/3) Fig. 2

Les deux sources, l'une positive (22) et l'autre négative (23) sont réalisées à partir de convertisseur dont la tension de sortie est totalement isolée. Le même montage réalisé sur un circuit imprimé indépendant, peut ainsi être utilisé pour l'une ou l'autre source. La personnalisation est réalisée par le sens des connexions de sorties.

3.1. Principe de fonctionnement

Le principe de fonctionnement du convertisseur utilisé est différent de celui utilisé par les sources basses tensions. Il porte le nom "fly back". Dans ce type de convertisseur, l'énergie est transférée au secondaire du transformateur (25) en deux temps. Dans la première phase, le transistor de puissance (26) charge la self de l'enroulement primaire pendant sa période de conduction. L'énergie emmagasinée $1/2\ LJ^2$, dépend de la self primaire du transformateur, de la tension d'alimentation et du temps de charge. A la coupure par le transistor de puissance, du courant au primaire, l'énergie est transférée au secondaire. Les impulsions à 20 KHz du convertisseur chargent une capacité à travers une diode de redressement (27).

La régulation de la tension de sortie est assurée par la variation du temps de conduction du transistor de puissance (26).

La commande du transistor de puissance (26) est réalisée par un circuit intégré (28) comportant les fonctions suivantes:

comparateur à une tension de référence interne et amplificateur. Dans la réalisation, seule la fonction amplification est utilisée.

oscillateur déterminant la fréquence de fonctionnement. Dans le cas présent: 20 KHz.

circuit transformant les informations issues de l'amplificateur en variation de largeur des impulsions de commande du transistor de puissance.

circuit de sécurité de courant du transistor de puissance

circuit de protection contre la saturation du circuit magnétique du transformateur.

circuit d'interface pour la commande du courant base du transistor de puissance. Le circuit intégré (28) est alimenté par les mêmes tensions que le circuit (14) du convertisseur basses tensions: +10V −5V.

### 3.2. Circuit de régulation (29)

La régulation est assurée par un étage à deux transistors montés en amplificateur différentiel. Ce circuit compare une fraction de la tension de sortie à une référence fournie par une diode zener. La tension d'erreur amplifiée est transmise à l'entrée du circuit intégré (28) par un système de photo-coupleur (30) fonctionnant en linéaire. Cette disposition permet d'isoler complètement le circuit secondaire des autres parties de l'alimentation. La tension de sortie peut ainsi être utilisée comme source positive ou négative.

### 3.3. Protection contre les surtensions

Un circuit de protection en surtension (31) est prévu au circuit secondaire. Ce dispositif agit à travers un photo-coupleur (32) sur l'amorçage d'un thyristor, bloque le convertisseur et provoque ainsi l'arrêt de la source haute tension.

### 3.4. Commande à distance

Une partie du pont de l'étage comparateur de tension (33) est déportée vers l'écran plasma. Cette partie du pont de résistances assure la programmation en tension de l'alimentation haute tension. Valeur qui est propre aux caractéristiques de chaque écran.

Le démarrage et l'arrêt de l'alimentation haute tension sont commandés depuis les circuits annexes de l'alimentation basse tension par une liaison à photo-coupleur. Le photo-coupleur assure l'isolement avec le circuit (28) relié au secteur.

### 4. Performances
### 4.1. Performances d'entrée

Puissance consommée: <500 V.A. soit η>70%
Réjection sur réseau: atténuation >110 dB
Maintien des performances aux variations permanentes: ±10% de la tension nominale ±5% de la fréquence nominale
Tenue aux transitoires de longue durée: <10 ms amplitude crête ±50% de V. nominale
Tenue aux subtransitoires: <1 μs amplitude crête ±1500 V.

### 4.2. Performances de sortie

+5V adjustable et protégé
±12V adjustables avec circuit de limitation de courant et protection thermique
±100V isolés et programmables à distance
Taux de régulation 1% sur l'ensemble des tensions.

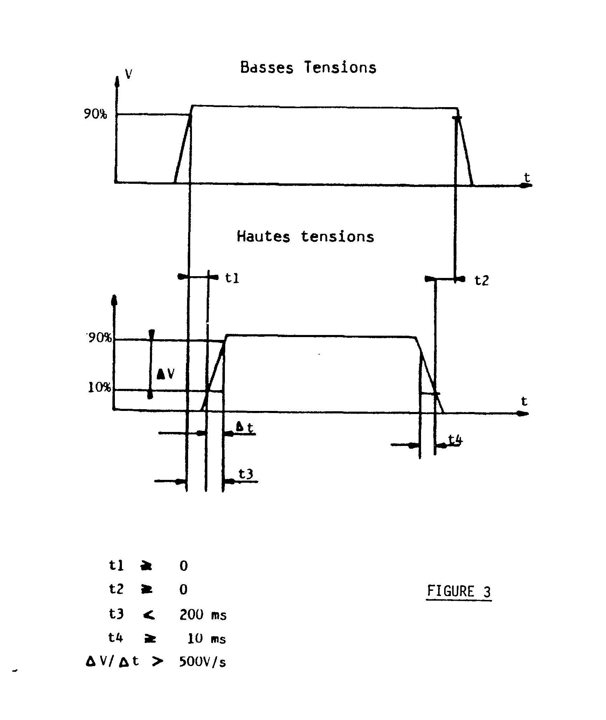

### 4.3. Chronogramme d'établissement des hautes tensions (Planche 3/3) Fig. 3

Les hautes tensions sont appliquées au panneau plasma si les conditions suivantes sont respectées:

présence du +5V et du +12V
détection du niveau correct de la tension secteur
détection des niveaux corrects des tensions +5V et +12V
présence de la commande d'inhibition.

Le temps d'établissement des hautes tensions est <200 ms.

### 4.4. Présentation physique du prototype

Il se présente sous la forme d'un coffret compartimenté pour un volume utile de 7 litres. Les parties basses tensions et hautes tensions sont séparées, ce qui permet des interventions aisées au niveau de la maintenance. La commande de mise en route et les protections sont situées dans une partie vide avec le connecteur qui assure la distribution des tensions d'alimentation et des différentes commandes logiques vers le panneau de visualisation à plasma.

**Revendications**

1. Alimentation pour panneau de visualisation à plasma, caractérisée en ce qu'elle utilise des convertisseurs haut rendement à découpage direct du réseau 220V 50 Hz fonctionnant à une fréquence ultrasonore de 20 KHz, présentée sous la forme d'un coffret d'un volume utile de 7 litres dont les dimensions permettent l'enfichage direct derrière un panneau de visualisation ou son raccordement éloigné par un cordon de 7 mètres comprenant les liaisons de télécommande à distance, le refroidissement par convection naturelle étant assuré par une face avant ajourée et en ce que, à la mise en merche de l'écran plasma l'apparition des hautes tensions et retardée par rapport à celle de basses tensions et qu'à la coupure de l'écran plasma les hautes tensions sont coupées avant la disparition de basses tensions.

2. Alimentation selon la revendication 1, caractérisée en ce que le circuit d'entrée secteur est protégé par un filtre (1) évitant la réinjection des parasites générés par les circuits de commutation rapide.

3. Alimentation selon revendication 1, caractérisée en ce que le convertisseur principal, utilise un circuit spécialisé (12) qui transmet à travers un transformateur d'isolement (13) des signaux rectangulaires à la fréquence de 20 KHz à rapport cyclique variable vers un circuit d'interface (14) pilotant un transistor de puissance (7) qui commute une tension filtrée de 300V (2) au primaire d'un transformateur à noyau de ferrite (8).

4. Alimentation selon la revendication 1, caractérisée en ce que les circuits annexes comportent des fonctions permettant:

la détection de la présence du secteur (18), des sources basses tensions (17),
la commande des hautes tensions (19),
le retard d'apparition des hautes tensions (24),
l'inhibition des hautes tensions (20).

5. Alimentation selon la revendication 1, caractérisée en ce qu'elle comporte des sources multiples, permettant de générer les tensions:

+5V 20A (9)
+12V 2A (10)
−12V 1,5A (11)
+100V 1,2A (22) programmable à distance
−100V 1,2A (23) programmable à distance.

Toutes ces sources étant protégées contre les surcharges et les surtensions.

6. Alimentation selon la revendication 1, caractérisée en ce qu'elle comporte des fonctions logiques combinatoires ne permettant l'application des hautes tensions au panneau plasma, que si les conditions suivantes sont respectées:

présence du +5V et du +12V (17)

détection du niveau correct de la tension secteur (18)

détection du niveau correct des tensions +5V et +12V (16)

présence de la commande d'inhibition (20)

à l'établissement, les hautes tensions apparaissent 200 ms après des basses tensions,

à la coupure, les basses tensions sont maintenues pendant 10 ms après la disparition des hautes tensions (Planche 3/3 Fig. 3).

## Patentansprüche

1. Versorgungsvorrichtung für Plasma-Bildschirmanzeigen, dadurch gekennzeichnet, daß sie Hochleistungs-Zwischenkreisumrichter für die Verarbeitung der Netzspannung von 220V 50 Hz in einer bei der Ultraschallfrequenz von 20 kHz getakteten Steuerspannung einsetzt, bestehend aus einem Kasten mit einem inneren Nutzvolumen von 7 dm3, dessen Abmessungen das unmittelbare Aufstecken hinter einer Bildschirmanzeige oder seinen Anschluß über einen 7 Meter langen mehradrigen Fernsteuerkabel ermöglicht, wobei die Kühlung durch selbsttätiger Wärmekonvektion über eine gelöcherte Frontplatte erfolgt, und daß beim Einschalten der Plasma-Bildschirmanzeige das Anlegen der Hochspannungen zeitverzögert gegenüber dem Anlegen der Niederspannungen und beim Ausschalten der Plasma-Bildschirmanzeige die Hochspannungen vor dem Verschwinden der Niederspannungen erfolgt.

2. Versorgungsvorrichtung nach Anspruch 1, dadurch gekennzeichnet, daß der Eingangskreis durch einen Filter (1) geschützt ist, der die Rückspeisung in das Netz der von den Schnellschaltkreisen erzeugten Störsignale verhindert.

3. Versorgungsvorrichtung nach Anspruch 2, dadurch gekennzeichnet, daß der Hauptumrichter einen Regelschaltkreis (12) einsetzt, der über einen Trenntransformator (13) Rechtecksimpulse mit einer Taktfrequenz von 20 kHz und einem veränderlichen Tastverhältnis einem Schnittstellenkreis (14) zur Steuerung eines Leistungstransistors (7) überträgt, wobei der Leistungstransistor eine gefilterte Gleichspannung von 300V (2) auf die Primärwicklung eines Ferritkern-Transformators (8) schaltet.

4. Versorgungsvorrichtung nach Anspruch 1, dadurch gekennzeichnet, daß die Hilfsschaltkreise für die Ausführung folgender Funktionen ausgelegt sind:

Ueberwachung der Netzspannung (18) sowie der Niederspannungsquellen (17),

Steuerung der Hochspannungen (19),

zeitverzögerte Einschaltung der Hochspannungen (24),

Unterdrückung der Hochspannungen (20).

5. Versorgungsvorrichtung nach Anspruch 1, dadurch gekennzeichnet, daß sie für die Erzeugung mehrerer, nachstehend angeführter Speisespannungen ausgelegt ist:

+5V 20A (9)

+12V 2A (10)

−12V 1,5A (11)

+100V 1,2A (22), ferneinstellbare Steuerspannung,

−100V 1,2A (23), ferneinstellbare Steuerspannung,

wobei sämtliche Niederspannungsquellen gegen Ueberlast und Ueberspannungen geschützt sind.

6. Versorgungsvorrichtung nach Anspruch 1, dadurch gekennzeichnet, daß sie über geknüpfte Schaltfunktionen gesteuert wird, die das Anlegen der Hochspannung der Plasma-Bildschirmanzeige nur beim Bestehen folgender Bedingungen ermöglichen:

Vorhandensein der +5V- und +12V-Speisespannungen (17),

Erfassung eines genügenden Netzspannungspegels (18),

Erfassung eines genügenden +5V- und +12V-Spannungspegels (16),

Vorhandensein des Unterdrückungs-Steuersignals (20).

Bei Einschaltung der Plasma-Bildschirmanzeige, werden die Hochspannungen 200 ms nach den Niederspannungen angelegt.

Bei Ausschaltung der Plasma-Bildschirmanzeige werden die Niederspannungen während einer Zeitspanne von 10 ms nach dem Verschwinden der Hochspannungen aufrechterhalten (Abbildungsseite 3/3, Abb. 3).

## Claims

1. Power supply for plasma display panel, using high-efficiency converters that chop the 220V/50 Hz line current directly and operate at an ultrasonic frequency of 20 kHz, and coming in the form of a box with a useful volume of seven liters and having dimensions allowing it to be connected directly to the back of a display panel, or at a distance by a seven-meter cord including the remote control links, and cooled by natural convection through a perforated front panel, wherein, at the time the plasma screen is switched on the appearance of high voltages is delayed with respect to the appearance of the low voltages, and wherein the high voltages are cut off before the low voltages disappear at the time the plasma screen is switched off.

2. Power supply of claim 1, wherein the line input circuit is protected by a filter preventing the feedback of spurious signals generated by the high-speed switching circuits.

3. Power supply of claim 1, wherein the main converter uses a special circuit that transmits rectangular signals through an isolating transformer at a frquency of 20 kHz, with variable cyclic ratio, to an interface circuit controlling a power transistor that switches a filtered 300V voltage to the primary of an iron core transformer.

4. Power supply of claim 1, wherein the ancillary circuits include functions that:

detect the presence of the line voltages and of the low-voltage sources;

control the high voltages;

delay the appearance of the high voltages;

inhibit the high voltages.

5. Power supply of claim 1, wherein it includes multiple sources from which:

+5V 20A,

+12V 2A,

−12V 1.5A,

+100V 1.2A, remotely programmable, and

−100V 1.2A, remotely programmable,

can be generated and protected against overloads and overvoltages.

6. Power supply of claim 1, wherein it includes combinatorial logic functions allowing the application of the high voltages to the plasma panel only if the following conditions are met:

presence of the +5V and of the +12V;

correct line voltage level;

correct +5V and +12V voltage levels;

presence of the inhibit control;

at power on, the high voltages appear 200 ms after the low voltages;

at cutoff, the low voltages are maintained for 10 ms after the high voltages disappear.

FIG. 1

EP 0 177 595 B1

FIG. 2

Basses Tensions

Hautes tensions

t1  ≥  0
t2  ≥  0
t3  <  200 ms
t4  ≥   10 ms
ΔV/Δt  >  500V/s

FIGURE 3

3